(19) **Europäisches Patentamt / European Patent Office / Office européen des brevets**

(11) **EP 1 930 389 A1**

(12) **EUROPEAN PATENT APPLICATION**
published in accordance with Art. 153(4) EPC

(43) Date of publication:
**11.06.2008 Bulletin 2008/24**

(21) Application number: **06796643.2**

(22) Date of filing: **22.08.2006**

(51) Int Cl.:
*C09K 3/00* (2006.01)   *C08L 33/00* (2006.01)
*F16F 15/02* (2006.01)

(86) International application number:
**PCT/JP2006/316429**

(87) International publication number:
**WO 2007/023820 (01.03.2007 Gazette 2007/09)**

(84) Designated Contracting States:
**DE GB**

(30) Priority: **22.08.2005 JP 2005240488**

(71) Applicant: **Nippon Shokubai Co.,Ltd.
Osaka-shi, Osaka 541-0043 (JP)**

(72) Inventors:
• **MIYAWAKI, Yukihiro
Kobe-shi, Hyogo; 6511301 (JP)**

• **NAGAISHI, Dai
Suita-shi, Osaka; 5640035 (JP)**

(74) Representative: **Brehm, Hans-Peter et al
Hansmann & Vogeser
Patent- und Rechtsanwälte
Leutstettener Straße 13
D-82319 Starnberg (DE)**

(54) **EMULSION FOR VIBRATION DAMPER**

(57)    To provide an emulsion for vibration damping materials particularly excellent in vibration damping property in a wide temperature range, and therefore useful for vibration damping materials of various structures. An emulsion for vibration damping materials, comprising an acrylic copolymer prepared by copolymerizing a monomer component comprising a polar group-containing monomer, wherein the polar group-containing monomer has a SP value (solubility coefficient) of 10.0 or more and 14.0 or less; and An emulsion for vibration damping materials, comprising an acrylic copolymer prepared by copolymerizing a monomer component comprising a polar group-containing monomer, wherein the polar group-containing monomer is acrylonitrile, and the polar group-containing monomer is less than 10% by weight relative to 100% by weight of the total monomer component.

Printed by Jouve, 75001 PARIS (FR)

EP 1 930 389 A1

**Description**

TECHNICAL FIELD

The present invention relates to an emulsion for vibration damping materials. More preferably, the present invention relates to an emulsion for vibration damping materials useful as a raw material of vibration damping materials used to prevent vibration and noise of various structures, thereby to insure sustained quietude.

BACKGROUND ART

Vibration damping materials are used to prevent vibration and noise of various structures to insure sustained quietude and have been widely used beneath cabin floors of road vehicles and also applied to rolling stock, ships, aircraft, electric machines, buildings, and construction machines, among other uses. Molded products such as plate products and sheet products produced by using materials having vibration absorbing performance and sound absorbing performance have been conventionally used as raw materials used for such vibration damping materials. However, it is difficult for such molded products to be used at vibration or noise-generation positions having complicated shapes. Therefore, various methods for improving the workability and thereby sufficiently exhibiting the vibration damping property have been investigated. That is, an inorganic powder-containing asphalt sheet has been installed under automotive cabin flooring, for instance, but since the sheet must be secured in position by thermal fusion, improvements in workability and the like are needed and studies are underway on various compositions for vibration damping materials and polymers for the formation of vibration damping materials, for example.
Coating type vibration damping materials (coating materials) have been developed as an alternative material for such molded products. For example, the following vibration damping coating materials have been variously proposed: vibration damping coating materials are sprayed onto positions to be subjected to damping treatment with a spray or applied thereto by any methods, and thus-formed coating film can provide vibration absorbing effect and sound absorbing effect. Specifically, not only aqueous vibration damping coating materials in which synthetic resin powders are blended with vehicles such as asphalt, rubber, and synthetic resin and thereby the hardness of the obtained coating film is improved, but also as materials suitably used for interior parts of cars, vibration coating materials in which activated carbon as a filler is dispersed into a resin emulsion, have been developed. However, even these conventional products do not provide sufficiently satisfactory vibration damping performances. Techniques for further sufficiently exhibiting the vibration damping performances have been desired.
With respect to conventional coating type vibration damping materials, disclosed is an aqueous vibration damping composition prepared by adding a compatibilizing agent to a mixture of aqueous dispersions of two or more kinds of polymers having different glass transition temperatures at a specific ratio (for example, referring to Japanese Kokai Publication No. 2001-152028 (page 2)). In this composition, the mixture of aqueous dispersions of incompatible polymers is used, and the compatibilizing agent is added to cover the incompatibility, and thereby the temperature peak of the vibration damping property can be broad. However, in such a composition, the compatibilizing agent may remain in the vibration damping coating film. Therefore, such a composition has room for improvement in order to sufficiently exhibit the vibration damping performances.

SUMMARY OF THE INVENTION

The present invention has been made in view of the above-mentioned state of the art. The present invention has an object to provide an emulsion for vibration damping materials particularly excellent in vibration damping property in a wide temperature range, and therefore useful for vibration damping materials of various structures.
The present inventors have made various investigations about emulsions for vibration damping materials. The inventors noted that if an emulsion for vibration damping materials contains an acrylic copolymer prepared by using a specific polar group-containing monomer, interaction between the molecular chains improves, and thereby cohesion in the copolymer increases, leading to significant improvement in vibration damping property. The inventors also found that vibration damping materials formed from such an emulsion for vibration damping materials can exhibit dramatically excellent vibration damping property. Thereby, the above-mentioned problems have been admirably solved.
Further, the inventors found that monomers having a SP value (solubility coefficient) of 10.0 or more and 14.0 or less, and acrylonitrile are preferable as the polar group-containing monomer, and that if methacrylic acid is used as the polar group-containing monomer, the methacrylic acid is uniformly polymerized into a copolymer by emulsion polymerization, and therefore the vibration dampingproperty can be further improved. Thereby, the present invention has been completed.
The emulsion for vibration damping materials of the present invention can be particularly preferably used for aqueous coating type vibration damping materials.

That is, the present invention is an emulsion for vibration damping materials, comprising an acrylic copolymer prepared by copolymerizing a monomer component comprising a polar group-containing monomer, wherein the polar group-containing monomer has a SP value (solubility coefficient) of 10.0 or more and 14.0 or less.

The present invention is also an emulsion for vibration damping materials, comprising an acrylic copolymer prepared by copolymerizing a monomer component comprising a polar group-containing monomer, wherein the polar group-containing monomer is acrylonitrile, and the polar group-containing monomer is less than 10% by weight relative to 100% by weight of the total monomer component.

DETAILED DESCRIPTION OF THE INVENTION

The present invention is described in more detail below.

The emulsion for vibration damping materials of the present invention contains an acrylic copolymer prepared by copolymerizing a monomer component containing a polar group-containing monomer. One or two or more acrylic copolymers may be used as the acrylic copolymer. Such an acrylic copolymer generally exists in the form in which it is dispersed in a medium. That is, it is preferable that the above-mentioned emulsion for vibration damping materials has a medium and an acrylic copolymer dispersed in the medium. The medium is preferably an aqueous medium. Examples of such an aqueous medium include water and mixed solvents of water and a solvent capable of mixing with water. Among them, water is preferred in view of influence on environment or safety, which may be caused by use of a coating material prepared by using the vibration damping composition of the present invention.

The proportion of the above-mentioned acrylic copolymer is preferably 70% by weight or less, relative to 100% by weight of the total amount of the emulsion for vibration damping materials. If the proportion is more than 70% by weight, the viscosity of the emulsion for vibration damping materials becomes too high, and thereby, the emulsion may not maintain sufficient dispersion stability and then aggregate. The proportion is more preferably 60% by weight or less.

In the present invention, the "acrylic copolymer" means a copolymer prepared by using at least two kinds of monomer components, and at least one kind of the monomer components is a monomer having an unsaturated double bond and a -COO group (hereinafter, also referred to as "(meth)acrylic acid (salt) monomer"). That is, the "acrylic copolymer" means a copolymer prepared by using at least two kinds of monomer components, wherein at least one kind of the monomer components is a monomer represented by $C(R^1)_2$=CH-COOR$^2$, or $C(R^3)_2$=C(CH$_3$)-COOR$^4$ (R$^1$, R$^2$, R$^3$, and R$^4$ being the same or different and each representing a hydrogen atom, a metal atom, an ammonium group, an organic amine group, or a straight, branched, or cyclic alkyl group.).

If two or more kinds of acrylic copolymers are used, these copolymers are different in any of various properties such as weight average molecular weight, glass transition temperature, SP value (solubility coefficient), kind of monomer to be used, and proportion of the monomer. Among them, it is preferable that these copolymers are different in glass transition temperature, as mentioned below.

The monomer component used for preparing the above-mentioned acrylic copolymer essentially contains a polar group-containing monomer. It is preferable that the polar group-containing monomer contains a monomer having a SP value of 10.0 or more and 14.0 or less and/or acrylonitrile. One or two or more such monomers may be used. Thus, if the monomer component essentially contains a specific polar group-containing monomer is used, interaction between the molecular chains improves, and thereby cohesion in the copolymer increases, leading to significant improvement in vibration damping property.

It is preferable that the above-mentioned monomer having a SP value of 10.0 or more and 14.0 or less contains, as a polar functional group, at least one functional group selected from the group consisting of a carboxyl group (-COOH group), a hydroxyl group (-OH group), a nitrile group (-CN group), an amine group (primary to tertiary), a vinyl group (ethenyl group), and an ester group (-COO group). Among them, ethyl acrylate, methacrylic acid, methacrylonitrile, and (meth)acrylate containing a hydroxyl group and vinyl acetate are more preferred. Thus, the preferable embodiments of the present invention include an embodiment in which the polar group-containing monomer is at least one monomer selected from the group consisting of ethyl acrylate, methacrylic acid, methacrylonitrile, (meth)acrylate containing a hydroxyl group, and vinyl acetate.

Preferred examples of the above-mentioned (meth)acrylate containing a hydroxyl group include 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl acrylate (tradename: 4HBA, product of Mitsubishi Chemical Corp.), 4-hydroxybutyl methacrylate, α-hydroxymethylethylacrylate, α-hydroxymethylmethylacrylate, caprolactone-modified hydroxy(meth)acrylate (tradename: Placcel F series, product of Daicel Chemical Ind.), and 4-methylolcyclohexylmethyl acrylate (tradename: CHDMMA, product of Nippon Kasei Co., Ltd.). These may be used singly or in combination of two or more species of them. Among them, (meth)acrylate containing a secondary hydroxyl group is preferable. More preferred is 2-hydroxypropyl(meth) acrylate.

The above-mentioned SP value can be calculated from the following formula.

[Equation 1]

$$\delta = \left( \Sigma \Delta e_1 \diagup \Sigma \Delta V_m \right)^{0.5}$$

in the formula,

δ representing a SP value of the monomer;
$\Delta_{el}$ representing a calculated value (kcal/mol) of evaporation energy of the monomer;
$\Delta V_m$ being a calculated value (ml/mol) of molecular volume of the monomer
SP values of representative monomers, calculated from the above formula, are shown as follows.

Butyl acrylate: 9.77
2-ethylhexyl acrylate: 9.22
Methyl methacrylate: 9.93
Styrene: 8.6
Ethyl acrylate: 10.2
Methacrylic acid: 12.54
Methacrylonitrile: 12.7
Hydroxyethyl methacrylate: 13.47
Acrylic acid: 14.04
Acrylamide: 19.19
Methacrylamide: 16.25
Acrylonitrile: 14.39
Vinyl acetate: 10.56

Thus, it is preferable that the above-mentioned polar group-containing monomer is at least one monomer selected from the group consisting of ethyl acrylate, methacrylic acid, methacrylonitrile, (meth) acrylate containing a hydroxyl group, vinyl acetate, and acrylonitrile.

It is preferable that the proportion of the above-mentioned polar group-containing monomer is appropriately determined depending on the kind of the monomer to be used, and the like. The proportion of such a monomer is preferably 0.1% by weight or more relative to 100% by weight of the total monomer component, for example. If the proportion is less than 0.1% by weight, the vibration damping property may be insufficiently exhibited. The proportion is more preferably 0.5% by weight or more, and still more preferably 1.0% by weight or more. The proportion is also preferably 50% by weight or less, and more preferably 20% by weight or less, and still more preferably 10% by weight or less.

If acrylonitrile is used as the above-mentioned polar group-containing monomer, it is preferable that the acrylonitrile is less than 10% by weight relative to 100% by weight of the total monomer component. If the acrylonitrile is not less than 10% by weight, the functional effect of the present invention of exhibiting dramatically excellent vibration damping property may be insufficiently exhibited. The acrylonitrile is preferably 7% by weight or less, and more preferably 5% by weight or less.

The above-mentioned monomer component contains one or two or more kinds of (meth)acrylic acid (salt) monomer(s), as mentioned above. Examples of such a monomer include acrylic acid, crotonic acid, citraconic acid, itaconic acid, maleic acid, maleic anhydride, fumaric acid, methyl acrylate, methyl methacrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, pentylacrylate, pentylmethacrylate, isoamylacrylate, isoamyl methacrylate, hexyl acrylate, hexyl methacrylate, cyclohexyl acrylate, cyclohexyl methacrylate, octyl acrylate, octyl methacrylate, isooctyl acrylate, isooctyl methacrylate, nonyl acrylate, nonyl methacrylate, isononyl acrylate, isononyl methacrylate, decyl acrylate, decyl methacrylate, dodecyl acrylate, dodecyl methacrylate, tridecyl acrylate, tridecyl methacrylate, hexadecyl acrylate, hexadecyl methacrylate, octadecyl acrylate, octadecyl methacrylate, 2-ethylhexyl acrylate, 2-ethylhexyl methacrylate, vinyl formate, vinyl propionate, divinyl benzene, diallyl phthalate, triallyl cyanurate, ethylene glycol diacrylate, ethylene glycol dimethacrylate, 1,4-butanediol diacrylate, 1,4-butanediol dimethacrylate, 1,6-hexanediol diacrylate, 1,6-hexanediol dimethacrylate, diethylene glycol diacrylate, diethylene glycol dimethacrylate, allyl acrylate, allyl methacrylate, and salts thereof or esterified products thereof. One or two or more species of them may be preferably used.

Examples of other monomers include styrene, α-methyl styrene, vinyltoluene, ethyl vinylbenzene, methacrylonitrile, acrylamide, methacrylamide, diacetone acrylamide, N-methylolacrylamide, and N-methylolmethacrylamide. One or two or more species of them may be used.

The above-mentioned salts are preferably metal salts, ammonium salts, organic amine salts, and the like. Examples of a metal atom forming the metal salts include monovalent metal atoms such as alkali metal atoms such as lithium, sodium, and potassium; divalent metal atoms such as alkaline earth metal atoms such as calcium and magnesium; and trivalent metal atoms such as aluminum and iron. Preferred examples of the organic amine salts include alkanolamines such as ethanolamine, diethanolamine, and triethanolamine, and triethylamines.

With respect to the proportion of the above-mentioned (meth)acrylicacid (salt) monomer, if, as this monomer, amonomer having a SP value of less than 10.0 or more than 14.0 (the monomer may be in the form of a salt or an esterified product) is used, this monomer is preferably 80% by weight or less, and more preferably 70% by weight or less, relative to 100% by weight of the total monomer component.

If a monomer having a SP value of 10.0 or more and 14.0 or less is used as the above-mentioned (meth) acrylic acid (salt) monomer, it is preferable that the above-mentioned polar group-containing monomer containing this monomer satisfies the above-mentioned proportion.

The above-mentioned monomer component may contain another monomer copolymerizable with the above-mentioned (meth) acrylic acid (salt) monomer and the above-mentioned polar group-containing monomer. Examples of another monomer include divinylbenzene, $\alpha$-methyl styrene, vinyltoluene, ethyl vinylbenzene, acrylonitrile, acrylamide, methacrylamide, diacetone acrylamide, N-methylolacrylamide, and N-methylolmethacrylamide.

The proportion of the above-mentioned another monomer is preferably 50% by weight or less and more preferably 30% by weight or less, relative to 100% by weight of the total monomer component, for example.

It is preferable that the acrylic copolymer has a glass transition temperature (Tg) of -50 to 60°C. Thereby, higher vibration damping property can be exhibited in a wide temperature range, and particularly in a practical range of 20 to 60°C, the vibration damping property is more excellent.

The Tg of the acrylic copolymer may be determined based on already acquired knowledge, and also may be controlled by the kind or proportion of the monomer component. However, the Tg can be calculated through the following calculation formula, theoretically.

[Equation 2]

$$\frac{1}{Tg'} = \left[ \frac{W_1'}{T_1} + \frac{W_2'}{T_2} + \cdot\cdot\cdot + \frac{W_n'}{T_n} \right]$$

in the formula, Tg representing Tg of the acrylic copolymer (absolute temperature);

$W_1$, $W_2$, and $\cdots$ $W_n$ each representing a mass fraction of each monomer to all the monomer component; and
$T_1$, $T_2$, and $\cdots$ $T_n$ each representing a glass transition temperature (absolute temperature) of a homopolymer prepared by each monomer component.

If two or more acrylic copolymers are used as the above-mentioned acrylic copolymer, acrylic copolymers having different Tgs are preferably used. Such difference in glass transition temperature (Tg) makes it possible for the emulsion for vibration damping materials to exhibit higher vibration damping property in a wide temperature range. Particularly in a practical range of 20 to 60°C, the vibration damping property is dramatically improved. If three or more acrylic copolymers are used, at least two acrylic copolymers are different in Tg, and the rest one or more acrylic copolymer may have the same Tg as Tg of either of the two acrylic copolymers.

In the above-mentioned acrylic copolymers having different Tgs, the acrylic copolymer having a higher Tg is defined as "acrylic copolymer (A)", and the acrylic copolymer having a lower Tg is defined as "acrylic copolymer (B)". It is preferable that a difference in Tg between the copolymers (A) and (B) is 15°C or more. If the difference is less than 15°C, the vibration damping property may be insufficiently exhibited at either 20°C or 60°C. The difference is more preferably 20°C or more, and still more preferably 25°C or more. The vibration damping property within the practical range may be insufficient if the difference is too large. Therefore, the difference in Tg is preferably 100°C or less, and more preferably 90°C or less, and still more preferably 80°C or less.

Specifically, the glass transition temperature (TgA) of the above-mentioned acrylic copolymer (A) is preferably 0°C or more. Thereby, a vibration damping coating film formed by using a coating material containing the emulsion for vibration damping materials of the present invention has more excellent drying property, and therefore expansion or cracks on the surface of the coating film can be more sufficiently suppressed. That is, a vibration damping material having dramatically excellent vibration damping property is formed. The glass transition temperature (TgA) of the acrylic copolymer (A) is more preferably 5°C or more.

If the above-mentioned acrylic copolymers (A) and (B) are used as the above-mentioned acrylic copolymer, the ratio by weight of the acrylic copolymer (A) to the acrylic copolymer (B) ((A)/(B))) is preferably 10 to 70/30 to 90, for example. Within this range, the functional effect of the present invention of exhibiting excellent vibration damping property can be sufficiently exhibited. The ratio by weight of the acrylic copolymer (A) to the acrylic copolymer (B) is more preferably 30 to 60/40 to 70.

The pH of the emulsion for vibration damping materials of the present invention is not especially limited, and preferably 2 to 10, and more preferably 3 to 9, for example. The pH of the emulsion can be adjusted by adding ammonia water, water-soluble amines, alkali hydroxide aqueous solutions or the like, into the emulsion.

The viscosity of the above-mentioned emulsion for vibration damping materials is not especially limited. The viscosity is preferably 10 to 10000 mPa·s, and more preferably 50 to 5000 mPa·s. The viscosity can be measured under 25°C and 20 rpm conditions with a B type rotational viscometer.

It is preferable that the emulsion for vibration damping materials of the present invention has a homogeneous structure or a mixed structure formed from two or more emulsions having different glass transition temperatures. Among them, the emulsion for vibration damping materials of the present invention having a mixed structure formed from two or more emulsions is more preferable because the vibration damping property is more sufficiently exhibited in a wide temperature range.

The above-mentioned emulsion for vibration damping materials having a homogeneous structure can be prepared by one-stage polymerization using a common emulsion polymerization method. Specifically, it is preferable that such an emulsion is prepared by emulsion polymerization of the monomer component in the aqueous medium, in the presence of a surfactant and/or a protective colloid. In this case, an emulsion for vibration damping materials containing one acrylic copolymer can be prepared.

The above-mentioned emulsion for vibration damping materials having a mixed structure has a mixed structure formed from two or more emulsions. The two or more emulsions preferably have different glass transition temperatures. Thereby, higher vibration damping property can be exhibited in a wide temperature range, and particularly in a practical range of 20 to 60°C, the vibration damping property is more excellent. That is, the preferable embodiments of the present invention include an embodiment in which the emulsion for vibration damping materials has a homogeneous structure or a mixed structure formed from two or more emulsions having different glass transition temperatures.

The above-mentioned two or more emulsions having different glass transition temperatures are formed from the above-mentioned acrylic copolymers having different glass transition temperatures, respectively. The preferable embodiments of the glass transition temperature and the ratio by weight are as mentioned above. Particularly preferable embodiment is an embodiment in which a glass transition temperature of at least one of the two or more emulsions having different glass transition temperatures is 0°C or more and higher than a glass transition temperature of at least one of other emulsions, and a difference between the glass transition temperatures is 15°C or more.

The above-mentioned emulsion for vibration damping materials having a mixed structure can be produced by preparing each of two or more emulsions by one-stage polymerization using a common emulsion polymerization method and then mixing these emulsions. The emulsion polymerizationispreferably performed in the same manner as in the above-mentioned emulsion for vibration damping materials having a homogeneous structure. The two or more emulsions may be mixed by a common method. In this case, an emulsion for vibration damping materials containing two or more acrylic copolymers can be prepared.

A chain transfer agent is preferably used in the emulsion for vibration damping materials

Examples of the above-mentioned chain transfer agent include alkyl mercaptans such as hexyl mercaptan, octylmercaptan, n-dodecyl mercaptan, t-dodecyl mercaptan, n-hexadecyl mercaptan, and n-tetradecyl mercaptan; halogenated hydrocarbons such as carbon tetrachloride, carbon tetrabromide, and ethylene bromide; mercaptocarboxylic acid alkyl esters such as 2-ethylhexyl mercaptoacetate, 2-ethylhexyl mercaptopropionate, and tridecyl mercaptopropionate; mercaptocarboxylic acid alkoxyalkyl esters such as methoxybutyl mercaptoacetate and methoxybutyl mercaptopropionate; carboxylic acid mercaptoalkyl esters such as 2-mercaptoethyl octanoate; $\alpha$-methylstyrene dimer, terpinolene, $\alpha$-terpinene, $\gamma$-terpinene, dipentene, anisole, and allyl alcohol. One or two or more species of them may be used. Among them, it is preferable to use alkylmercaptans such as hexylmercaptan, octylmercaptan, n-dodecylmercaptan, t-dodecylmercaptan, n-hexadecylmercaptan, and n-tetradecylmercatan.

The above-mentioned production method using the emulsion polymerization is described in more detail below.

The aqueous medium and the monomer component in the above-mentioned production method are as mentioned above.

The surfactant may be a surfactant generally used in the emulsion polymerization, and is not especially limited. Examples of such a surfactant include anionic surfactants, nonionic surfactants, cationic surfactants, amphoteric surfactants, polymer surfactants, and reactive surfactants. One or two or more species of them is/are preferably used.

The above-mentioned anionic surfactant is not especially limited. Examples of the anionic surfactant include alkyl sulfates such as sodium dodecyl sulfate, potassium dodecyl sulfate, and ammonium alkyl sulfate; sodium dodecyl polyglycol ether sulfate; sodium sulforicinoate; alkyl sulfonates such as sulfonated paraffin salt; alkyl sulfonates such as sodium dodecylbenzene sulfonate, and alkali metal sulfates of alkali phenol hydroxyethylene; higher alkyl naphthalene sulfonates; naphthalene sulfonic acid formalin condensate; fatty acid salts such as sodium laurate, triethanol amine oleate, and triethanol amine abietate; polyoxyalkyl ether sulfates; polyoxyethylene carboxylic acid ester sulfates; polyoxyethylene phenyl ether sulfates; succinic acid dialkyl esters sulfonates; and polyoxyethylene alkylaryl sulfates. One or two or more species of them may be used.

The above-mentioned nonionic surfactant is not especially limited. Examples of the nonionic surfactant include polyoxyethylene alkyl ethers; polyoxyethylene alkylaryl ethers; sorbitan aliphatic esters; polyoxyethylene sorbitan aliphatic esters; aliphatic monoglycerides such as monolaurate of glycerol; polyoxyethylene-oxypropylene copolymer; condensates of ethylene oxide and aliphatic amines, aliphatic amides, or aliphatic acids. One or two or more species of them may be used.

The above-mentioned cationic surfactant is not especially limited. Examples of the cationic surfactant include dialkyl dimethylammoniumsalts, estertypedialkylammoniumsalts, amide type dialkyl ammonium salts, and dialkylimidazolium salts. One or two or more species of them may be used.

The above-mentioned amphoteric surfactant is not especially limited. Examples of the amphoteric surfactant include alkyl dimethylamino acetic acid betaine, alkyl dimethyl amine oxide, alkyl carboxy methyl hydroxyethyl imidazolinium betaine, alkyl amide propyl betaine, and alkyl hydroxy sulfobetaine. One or two or more species of them may be used.

The above-mentioned polymer surfactant is not especially limited. Examples of the polymer surfactant include polyvinyl alcohols and modified products thereof; (meth)acrylic acid water-soluble polymers; hydroxyethyl (meth)acrylic acid water-soluble polymers; hydroxypopyl (meth)acrylic acid water-soluble polymers; and polyvinyl pyrrolidone. One or two or more species of them may be used.

Among the above-mentioned surfactants, non-nonylphenyl type surfactants are preferably used in view of environment.

The use amount of the above-mentioned surfactant may be appropriately determined depending on the kind of the surfactant to be used or the kind of the monomer component to be used. For example, the use amount of the surfactant is preferably 0.3 to 10 parts by weight, and more preferably 0.5 to 5 parts by weight, relative to 100 parts by weight of the total amount of the monomer component used for preparing the acrylic copolymer.

Examples of the above-mentioned protective colloid include polyvinyl alcohols such as partially saponificated polyvinyl alcohols, completely saponificated polyvinyl alcohols, and modified polyvinyl alcohols; cellulose derivatives such as hydroxyethyl cellulose, hydroxypropylcellulose, and carboxymethylcellulose salt; natural polysaccharides such as Guar gum. One or two or more species of them may be used. Such a protective colloid may be used singly or in combination with the surfactant.

The use amount of the above-mentioned protective colloid may be appropriately determined depending on the use conditions and the like. For example, the use amount of the protective colloid is preferably 5 parts by weight or less, and more preferably 3 parts by weight or less, relative to 100 parts by weight of the total amount of the monomer component used for preparing the acrylic copolymer.

A polymerization initiator is preferably used in order to initiate the emulsion polymerization in the above-mentioned production method. The polymerization initiator is not especially limited as long as it is a substance which is decomposed by heating and generates radical molecules. Water-soluble initiators are preferably used. Examples of such an initiator include persulfates such as potassium persulfate, ammonium persulfate, and sodium persulfate; water-soluble azo compounds such as 2,2'-azobis(2-amidinopropane)dihydrochloride, and 4,4'-azobis(4-cyanopentanoic acid); thermal decomposition initiators such as hydrogen peroxide; redox polymerization initiators such as hydrogen peroxide and ascorbic acid, t-butyl hydroperoxide and rongalite, potassium persulfate and metal salt, and ammonium persulfate and sodium hydrogensulfite. One or two or more species of them may be used.

The use amount of the above-mentioned polymerization initiator is not especially limited and may be appropriately determined depending on the kind of the polymerization initiator and the like. For example, the use amount of the polymerization initiator is preferably 0.1 to 2 parts by weight and more preferably 0.2 to 1 part by weight, relative to 100 parts by weight of the total amount of the monomer component used for preparing the acrylic copolymer.

A reducing agent may be used in combination with the above-mentioned polymerization initiator, if necessary, in order to accelerate the emulsion polymerization. Examples of the reducing agent include reducing organic compounds such as ascorbic acid, tartaric acid, citric acid, and grape sugar; and reducing inorganic compounds such as sodium thiosulfate, sodium sulfite, sodium bisulfite, and sodium metabisulfite. One or two or more species of them may be used.

The use amount of the above-mentioned reducing agent is not especially limited and preferably 0.05 to 1 part by weight, relative to 100 parts by weight of the total amount of the monomer component used for preparing the acrylic copolymer, for example.

It is also preferable in the above-mentioned production method to use a chain transfer agent if necessary at the time of the emulsion polymerization, for example, in order to adjust the average molecular weight of the acrylic copolymer. The chain transfer agent may be a generally used chain transfer agent and is not especially limited. Examples of the chain transfer agent include alkylmercaptans such as hexylmercaptan, octylmercaptan, n-dodecyl mercaptan, t-dodecyl mercaptan, n-hexadecyl mercaptan, and n-tetradecyl mercaptan; halogenated hydrocarbons such as carbon tetrachloride, carbon tetrabromide, and ethylene bromide; mercaptocarboxylic acid alkyl esters such as 2-ethylhexyl mercaptoacetate, 2-ethylhexyl mercaptopropionate, and tridecyl mercaptopropionate; mercaptocarboxylic acid alkoxyalkyl esters such as methoxybutyl mercaptoacetate and methoxybutyl mercaptopropionate; carboxylic acid mercaptoalkyl esters such as 2-mercaptoethyl octanoate; α-methylstyrene dimer, terpinolene, α-terpinene, γ-terpinene, dipentene, anisole, and allyl alcohol. One or two or more species of them may be used. Among them, it is preferable to use an alkylmercaptans such as hexylmercaptan, octylmercaptan, n-dodecylmercaptan, t-dodecylmercaptan, n-hexadecylmercaptan, and n-tetradecylmercatan.

The use amount of the above-mentioned chain transfer agent is not especially limited and preferably 2 parts by weight or less, and more preferably 1.0 part by weight or less, relative to 100 parts by weight of the total amount of the monomer component used for preparing the acrylic copolymer, for example.

Regarding the emulsion polymerization conditions in the above-mentioned production method, the polymerization temperature is not especially limited and preferably 0 to 100°C and more preferably 40 to 95°C, for example. The polymerization time is not especially limited, and preferably 1 to 15 hours, for example.

The addition mode of the monomer component, the polymerization initiator or the like is not especially limited. Any of en bloc addition, continuous addition, multistage addition and the like may be employed. These addition modes may be used in a suitable combination.

It is preferable that nonvolatile contents in the emulsion for vibration damping materials obtained by the above-mentioned production method, that is, the acrylic copolymer is 70% by weight or less relative to 100% by weight of the total amount of the emulsion, as mentioned above. If the proportion is more than 70% by weight, the viscosity of the emulsion for vibration damping materials becomes too high, and thereby the emulsion may not maintain sufficient dispersion stability and then aggregate. The proportion is more preferably 60% by weight or less.

The present invention is also a vibration damping composition comprising the emulsion for vibration damping materials.

The emulsion for vibration damping materials of the present invention can constitute a vibration damping composition, if necessary, together with other components. Such a vibration damping composition essentially containing the emulsion for vibration damping materials of the present invention is also one of the preferable embodiments of the present invention. Such a composition can form an aqueous vibration damping material capable of exhibiting excellent vibration damping property. The preferable embodiments of the present invention also include a use method of the emulsion for vibration damping materials, wherein the vibration damping composition is used as an aqueous vibration damping material.

The above-mentioned vibration damping composition preferably contains 40 to 90% by weight of solids relative to 100% by weight of the total amount of the vibration damping composition, and more preferably 50 to 83% by weight, and still more preferably 60 to 80% by weight. The pH of the vibration damping composition is preferably 7 to 11, and more preferably 7 to 9.

The mix amount of the emulsion for vibration damping materials in the above-mentioned vibration damping composition is determined such that solids of the emulsion for vibration damping materials is 10 to 60% by weight relative to 100% by weight of the solids of the vibration damping composition. The proportion is more preferably 15 to 55% by weight.

Examples of the above-mentioned other components include solvent; plasticizer; stabilizer; thickener; wetting agent; antiseptic; foaming inhibitor; filler; coloring agent; dispersant; antirust pigment; antifoaming agent; antioxidant; mildewproofing agent; ultraviolet absorber; and antistatic agent. One or two or more species of them may be used. Among them, the vibration damping composition preferably contains a filler. The above-mentioned other components can be mixed with the above-mentioned emulsion for vibration damping materials and the like using, for example, a butterfly mixer, a planetary mixer, a spiral mixer, kneader, and a Dissolver.

The above-mentioned other components may be those generally used and are not especially limited. The following compounds and the like may be used, for example.

Examples of the above-mentioned solvent include ethylene glycol, butyl cellosolve, butyl carbitol, and butyl carbitol acetate. The mix amount of the solvent may be appropriately determined such that the solids concentration of the emulsion for vibration damping materials in the vibration damping composition is within the above-mentioned range.

Preferred examples of the above-mentioned aqueous cross-linking agent include oxazoline compounds such as EPOCROS WS-500, WS-700, K-2010, 2020, 2030 (tradename, products of NIPPON SHOKUBAI CO., LTD.); epoxy compounds such as ADEKA resin EMN-26-60, EM-101-50 (tradename, products of ADEKA Corp.); melamine compounds such as CYMEL C-325 (tradename, product of Mitsui Cytec Ind.; block isocyanate compounds; zinc oxide compounds such as AZO-50 (tradename, 50% by weight of zinc oxide aqueous dispersant, product of NIPPON SHOKUBAI CO., LTD.). The mix amount of the aqueous cross-linking agent is preferably 0.01 to 20 parts by weight of solids, relative to 100 parts by weigh of solids of the emulsion for vibration damping materials, for example. The mix amount is more preferably 0.15 to 15 parts by weight, and still more preferably 0.5 to 15 parts by weight. The aqueous cross-linking agent may be added into the emulsion for vibration damping materials or may be added together with other components added for forming the vibration damping composition.

If the cross-linking agent is mixed with the above-mentioned emulsion for vibration damping materials or the above-mentioned vibration damping composition, the tougheness of the resin can be improved. Thereby, sufficiently high vibration damping property is exhibited in a high temperature range. Among them, oxazoline compounds are preferably used.

Polyvinyl alcohols, cellulose derivatives, and polycarboxylic acid resins may be mentioned as the above-mentioned thickener, for example. The mix amount of the thickener is preferably, 0.01 to 2 parts by weight of solids, and more preferably 0.05 to 1.5 parts by weight, and still more preferably 0.1 to 1 part by weight, relative to 100 parts by weight of solids of the emulsion for vibration damping materials.

Examples of the above-mentioned filler include inorganic fillers such as calcium carbonate, kaolin, silica, talc, barium sulfate, alumina, iron oxide, titanium oxide, glass powders, magnesium carbonate, aluminum hydroxide, talc, kieselguhr, and clay; flaky inorganic fillers such as glass flakes and mica; and filamentous inorganic fillers such as metal oxide whiskers, glass fibers. The mix amount of the inorganic filler is preferably 50 to 700 parts by weight, relative to 100 parts by weight of solids of the emulsion for vibration damping materials, and more preferably 100 to 550 parts by weight.

Organic or inorganic coloring agents such as titanium oxide, carbon black, red iron oxide, Hansa yellow, benzine yellow, copper phthalocyanine blue, and quinacridone red may be mentioned as the above-mentioned coloring agent, for example.

Inorganic dispersants such as sodium hexametaphosphate and sodium tripolyphosphate and organic dispersants such as polycarboxylic acid dispersants may be mentioned as the above-mentioned dispersant, for example.

Metal salts of phosphoric acid, metal salts of molybdic acid, and metal salts of boric acid may be mentioned as the above-mentioned antirust pigment.

Silicone antifoaming agents may be mentioned as the above-mentioned antifoaming agent, for example.

A foaming agent may be used as the above-mentioned other components. In this case, it is preferable that the above-mentioned vibration damping composition is dried by heating to form a vibration damping coating film, as mentioned below. If the above-mentioned emulsion for vibration damping materials further contains a foaming agent, the vibration damping material has a uniform foaming structure and becomes a thick film, and thereby sufficient thermal drying property or high vibration damping property is exhibited. Thus, the preferable embodiments of the present invention include a vibration damping composition containing the emulsion for vibration damping materials of the present invention and a foaming agent.

Such a vibration damping composition may contain other components, if necessary.

The above-mentioned foaming agent is not especially limited. Low-boiling hydrocarbon-containing thermal expansion microcapsules, organic foaming agents, and inorganic foaming agents are preferable, for example. One or two or more species of them may be used. Examples of the thermal expansion microcapsules include Matsumoto Microsphere F-30, F-50 (products of Matsumoto Yushi-Seiyaku Co., Ltd.); and EXPANCEL WU642, WU551, WU461, DU551, DU401 (product of Japan Expancell Co., Ltd.). Examples of the organic foaming agent include azodicarbonamide, azobisisobutyronitrile, N,N-dinitrosopentamethylenetetramine, p-toluenesulfonylhydrazine, p-oxybis(benzenesulfohydrazide), and N,N-dinitroso. Examples of the inorganic foaming agent include sodium bicarbonate, ammonium carbonate, and silicon hydride.

The mix amount of the above-mentioned foaming agent is preferably 0.5 to 5.0 parts by weight relative to 100 parts by weight of the emulsion for vibration damping materials, and more preferably 1.0 to 3.0 parts by weight.

It is also preferable that the above-mentioned vibration damping composition containing the emulsion for vibration damping materials and the foaming agent further contains an inorganic pigment, for example. Thereby, the above-mentioned thermal drying property and high vibration damping property can be sufficiently exhibited.

The above-mentioned inorganic pigment is not especially limited. One or two or more species of the above-mentioned inorganic coloring agents or inorganic antirust pigments may be used, for example.

The mix amount of the above-mentioned inorganic pigment is preferably 50 to 700 parts by weight, relative to 100 parts by weight of the emulsion for vibration damping materials, and more preferably 100 to 550 parts by weight, for example.

Polyvalent metal compounds may be used as the above-mentioned other components. In this case, the polyvalent metal compound improves the stability, dispersibility, thermal drying property of the vibration damping composition or the vibration damping property of the vibration damping material formed by the vibration damping composition. The polyvalent metal compounds are not especially limited. Examples of the polyvalent metal compounds include zinc oxide, zinc chloride, and zinc sulfate. One or two or more species of them may be used.

The form of the above-mentioned polyvalent metal compound is not especially limited, and may be in the form of a fine particle, an aqueous dispersion, an emulsified dispersion, or the like. Among them, the polyvalent metal compound is preferably used in the form of an aqueous dispersion or an emulsified dispersion, and more preferably in the form of an emulsified dispersion because the dispersibility in the vibration damping composition is improved. The use amount of the polyvalent metal compound is preferably 0.05 to 5.0 parts by weight, and more preferably 0.05 to 3.5 parts by weight, relative to 100 parts by weight of solids in the vibration damping composition.

The above-mentioned vibration damping composition is coated on a substrate and dried to give a coating film serving as a vibration damping material. The substrate is not especially limited. As the method of coating the substrate with the vibration damping composition, brush, spatula, air spray gun, airless spray gun, mortar gun, texture gun, and the like, may be used for coating.

The coating amount of the above-mentioned vibration damping composition may be appropriately determined depending on the intended application, expected performance, and the like. The vibration damping composition is preferably coated such that the coating film at the time of (after) drying has a face weight of 1.0 to 7.0 kg/m$^2$, and more preferably 2.0 to 6.0 kg/m$^2$. Use of the emulsion for vibration damping materials of the present invention makes it possible to obtain a coating film which hardly generates expansion or cracks at the time of drying and hardly causes sagging on the vertical surface. The preferable embodiments of the present invention include a coating method of the vibration damping composition, wherein the vibration damping composition is coated so as to have a face weight of 2.0 to 6.0 kg/m$^2$ after drying, and dried. The preferable embodiments of the present invention also include a vibration damping material obtainable by the coating method of the vibration damping composition.

Regarding the conditions to be used in the case where the above-mentioned vibration damping composition is coated on the substrate and dried to form a coating film, either drying by heating or drying at atmospheric temperature may be adopted. However, from efficiency points of view, drying by heating is preferred and preferably employed because the vibration damping composition of the present invention has excellent thermal drying property. The temperature of the drying by heating is preferably 80 to 210°C, and more preferably 110 to 180°C, and still more preferably 120 to 170°C.

The application of the vibration damping composition essentially containing the emulsion for vibration damping materials of the present invention is not especially limited. The vibration damping composition can exhibit excellent thermal drying property, vibration damping property and the like, and therefore can be preferably used in such applications as rolling stock, ships, aircraft, electric machines, buildings and construction machines, in addition to as automotive cabin floor base.

The emulsion for vibration damping materials of the present invention has the above-mentioned configuration. The emulsion for vibration damping materials is particularly useful as a raw material used in vibration damping materials of various structures because it is dramatically excellent in vibration damping property in a wide temperature range.

BEST MODE FOR CARRYING OUT THE INVENTION

The present invention is described in more detail with reference to Examples below, but the present invention is not limited to only these Examples. The terms, "part(s)" and "%" represent "part (s) by weight" and "% by weight", respectively, unless otherwise specified.

The glass transition temperature (Tg) and the viscosity in the following Examples and the like were determined by the above-mentioned procedures, respectively.

The white turbidity of the film was determined by the following procedures;

The obtained emulsion was charged into a mold in 100.0 mm (length) x 50.0 mm (width) x 2.00 mm (height) and left for 10 minutes at a room temperature. Then, the emulsion was baked at 140°C to form a resin film. Thus-obtained resin film was visually observed for transparency.

"Emulsion"

Example 1

A polymerization container equipped with a stirrer, a reflux condenser, a thermometer, a nitrogen gas inlet pipe and a dropping funnel was filled with deionized water (37.7 parts). Then, under stirring in a nitrogen gas stream, the contents of the container were heated to an internal temperature of 70°C. The dropping funnel was filled with methyl methacrylate (14.6 parts), styrene (39.9 parts), 2-ethylhexyl acrylate (44.0 parts), acrylic acid (1.0 part), methacrylic acid (0.5 parts), previously adjusted 20% aqueous solution of polyoxyethylene alkyl ether sulfate (product of DAI-ICHI KOGYO SEIYAKU CO., LTD., tradename "Hitenol NF-08")(15 parts), and deionized water (10 parts). Thereby, a monomer emulsion was prepared.

This obtained monomer emulsion was added dropwise into the polymerization container adjusted to 70°C, and thereby the reaction was allowed to proceed. The temperature was raised to 75°C, and the monomer emulsion was uniformly added dropwise into the container over 3 hours while keeping the internal temperature at 75°C. At the same time, 5% aqueous solution of potassium persulfate (7.0 parts) and 2% aqueous solution of sodium hydrogensulfite (17.5 parts) were uniformly added dropwise into the container over 3 hours. Through such dropwise addition, an emulsion was formed. After completion of the dropwise addition, the reaction was continued for 1 hour at 75°C. Thereby, each of the monomer components was completely consumed. Then, the reaction solution was cooled at 25°C, and a proper amount of 25% ammonia water was added into the reaction solution. Thereby, an emulsion (1) was obtained.

The obtained emulsion (1) was determined for glass transition temperature, solids concentration, pH and viscosity. And the white turbidity of the film was evaluated by visual observation. Table 1 shows these results.

Examples 2 to 7, and Comparative Example 1

Emulsions (2) to (7) and comparative emulsion (1) were obtained in the same manner as in Example 1, except that the formulation of the monomer components was changed as shown in Table 1.

Each of these emulsions (2) to (7) and comparative emulsion (1) was evaluated for various physical properties and the like, as performed in Example 1. Table 1 shows the results.

Example 8

Emulsions (8A) and (8B) were obtained in the same manner as in Example 1, except that the formulation of the monomer components was changed as shown in Table 1.

These emulsions (8A) and (8B) were mixed at a mix ratio by weight of 50/50 to form an emulsion. This emulsion was evaluated for solids concentration, pH, and viscosity. And the white turbidity of the film was evaluated by eye observation. Each of the emulsions (8A) and (8B) was determined for glass transition temperature. Table 1 shows results.

Examples 9 to 12, 14, and Comparative Examples 2 and 3

Emulsions prepared by mixing two or more emulsions were obtained in the same manner as in Example 8, except that the formulation of the monomer components was changed as shown in Table 1. Each of these emulsions was evaluated for various physical properties and the like, as performed in Example 8. Table 1 shows the results.

Example 13

An emulsion having a mixed structure was obtained in the same manner as in Example 8, except that the formulation of the monomer components was changed as shown in Table 1, and a foaming agent ("EXPANCEL WU642", product of Japan Fillite Co., Ltd.) 1. 5 parts was further added to 100 parts of the emulsion prepared by two or more emulsions.

This emulsion having a mixed structure was evaluated for physical properties, as performed in Example 8. Table 1 shows the results.

[Table 1]

EP 1 930 389 A1

| | | Examples | | | | | | | | | | | | | | Comparative Examples | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 | 2 | 3 |
| Emulsion (A) | Symbol | (1) | (2) | (3) | (4) | (5) | (6) | (7) | (8A) | (9A) | (10A) | (11A) | (12A) | (13A) | (14A) | Compar. (1) | Compar. (2) | Compar. (3) |
| | MMA | 14.6 | 14.6 | 14.6 | 14.6 | 14.6 | 14.6 | 14.6 | 24.3 | 24.3 | 24.3 | 24.3 | 24.3 | 24.3 | 24.3 | 14.6 | 24.3 | 24.3 |
| | St | 39.9 | 37.2 | 33.6 | 31.4 | 31.4 | 32.0 | 32.9 | 36.7 | 36.7 | 35.1 | 35.1 | 36.0 | 36.7 | 36.7 | 40.5 | 40.0 | 40.0 |
| | 2EHA | 44.0 | 44.2 | 22.5 | 22.5 | 22.5 | 22.5 | 22.5 | 22.5 | 22.5 | 22.5 | 22.5 | 22.5 | 22.5 | 22.5 | 43.9 | 22.5 | 22.5 |
| | BA | — | — | 25.3 | 25.3 | 25.5 | 24.9 | 24.0 | 12.5 | 12.5 | 12.1 | 12.1 | 11.2 | 12.5 | 12.5 | — | 12.2 | 12.2 |
| | AA | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | MAA | 0.5 | 3.0 | 3.0 | 5.0 | — | — | — | 3.0 | 3.0 | — | — | — | 3.0 | 3.0 | — | — | — |
| | AN | — | — | — | — | 5.0 | — | — | — | — | 5.0 | — | — | — | — | — | — | — |
| | Methacrylonitrile | — | — | — | — | — | 5.0 | — | — | — | — | 5.0 | — | — | — | — | — | — |
| | HEMA | — | — | — | — | — | — | 5.0 | — | — | — | — | 5.0 | — | — | — | — | — |
| | t-DM | — | — | — | — | — | — | — | — | — | — | — | — | — | 0.8 | — | — | — |
| | Molecular weight (Mw) | — | — | — | — | — | — | — | — | — | — | — | — | — | 25000 | — | — | — |
| Emulsion (B) | Symbol | — | — | — | — | — | — | — | (8B) | (9B) | (10B) | (11B) | (12B) | (13B) | (14B) | — | Compar. (2B) | Compar. (3B) |
| | MMA | — | — | — | — | — | — | — | 14.3 | 17.5 | 12.7 | 12.7 | 13.6 | 14.3 | 14.3 | — | 17.5 | 17.5 |
| | St | — | — | — | — | — | — | — | 20.0 | 20.0 | 20.0 | 20.0 | 20.0 | 20.0 | 20.0 | — | 20.0 | 20.0 |
| | 2EHA | — | — | — | — | — | — | — | 29.2 | 29.2 | 29.2 | 29.2 | 29.2 | 29.2 | 29.2 | — | 29.2 | 29.2 |
| | BA | — | — | — | — | — | — | — | 32.5 | 32.3 | 32.1 | 32.1 | 31.2 | 32.5 | 32.5 | — | 32.3 | 32.3 |
| | AA | — | — | — | — | — | — | — | 1.0 | 1.0 | 1.0 | 1.0 | 1.0 | 1.0 | 1.0 | — | 1.0 | 1.0 |
| | MAA | — | — | — | — | — | — | — | 3.0 | — | — | — | — | 3.0 | 3.0 | — | — | — |
| | AN | — | — | — | — | — | — | — | — | — | 5.0 | — | — | — | — | — | — | — |
| | Methacrylonitrile | — | — | — | — | — | — | — | — | — | — | 5.0 | — | — | — | — | — | — |
| | HEMA | — | — | — | — | — | — | — | — | — | — | — | 5.0 | — | — | — | — | — |
| | t-DM | — | — | — | — | — | — | — | — | — | — | — | — | — | 0.6 | — | — | — |
| | Molecular weight (Mw) | — | — | — | — | — | — | — | — | — | — | — | — | — | 41000 | — | — | — |
| Foaming agent (part/emulsion 100 parts) | | — | — | — | — | — | — | — | — | — | — | — | — | 1.5 | — | — | — | 1.5 |
| TgA/TgB(°C) | | 0 | 0 | 0 | 0 | 0 | 0 | 0 | 20/-20 | 20/-20 | 20/-20 | 20/-20 | 20/-20 | 20/-20 | 20/-20 | 0 | 20/-20 | 20/-20 |
| Emulsion properties | Solids(% by weight) | 55.0 | 55.0 | 55.0 | 55.0 | 55.0 | 55.0 | 55.0 | 55.0 | 55.0 | 55.0 | 55.0 | 55.0 | 55.0 | 55.0 | 55.0 | 55.0 | 55.0 |
| | pH | 7.7 | 7.7 | 7.7 | 7.9 | 7.7 | 7.7 | 7.7 | 7.7 | 7.7 | 7.7 | 7.7 | 7.7 | 7.7 | 7.7 | 7.7 | 7.7 | 7.8 |
| | Viscosity(mPa·s) | 250 | 200 | 200 | 200 | 200 | 200 | 200 | 210 | 210 | 210 | 210 | 210 | 270 | 350 | 240 | 250 | 320 |
| | Film turbidity | Transparent | Transparent | Transparent | Transparent | Transparent | Transparent | Transparent | White turbid | White turbid | White turbid | White turbid | White turbid | White turbid | White turbid | Transparent | White turbid | White turbid |

Descriptions in Table 1 are as follows.

MMA: methyl methacrylate

St: styrene

2EHA: 2-ethylhexyl acrylate

BA: butyl acrylate

AA: acrylic acid

MAA: methacrylic acid

AN: acrylonitrile

HEMA: hydroxyethyl methacrylate

t-DM: t-dodecylmercaptan

TgA/TgB (°C): glass transition temperature (°C) of the emulsion (A)/glass transition temperature (°C) of the emulsion (B)

"Vibration damping composition"

The emulsions obtained in Examples 1 to 14 and Comparative Examples 1 to 3 were mixed as follows to form vibration damping compositions. The vibration damping compositions were evaluated for vibration damping property.
The emulsion obtained in Example 1 to 19, or Comparative Example 1 to 5: 100 parts
Calcium carbonate ("NN#200", product of NITTO FUNKA KOGYO K. K., filler): 250 parts
Dispersant ("DEMOL EP", product of Kao Corp., special
polycarboxylic acid polymer surfactant): 1 part
Thickener ("ACRYSET AT-2", product of NIPPON SHOKUBAI Co., Ltd., alkali soluble acrylic thickener): 2 parts
Antifoaming agent ("NOPCO 8034L", product of SAN NOPCO Ltd., antifoaming agent, main component: hydrophobic silicon + mineral oil): 0.3 parts

"Vibration damping property"

The above-mentioned vibration damping composition was coated on a cold rolling steel plate (SPCC: 10 x 245 x 1.6 mm) such that the coating film after drying has a face weight of 4.0 kg/m$^2$. The coated composition was dried for 30 minutes at 150°C. Thereby, a vibration damping coating film was formed on the cold rolling steel plate. As the measurement of vibration damping property, the loss factor values (%) at 20°C, 40°C, and 60°C atmosphere were measured by resonance method (3dB method) using a cantilever method (product of ONO SOKKI CO., LTD., loss factor value measurement system). Table 2 shows the results.
Using the composition in Example 13, the composition was coated such that the coating film after drying has a face weight of 1.0 to 7.5 kg/m$^2$. Then, the coating filmwas similarlymeasured for loss factor values. Table 3 shows the results.
As a result of the measurement, higher vibration damping property was obtained as the face weight increased in the face weight of 1.0 to 6.0 kg/m$^2$. However, in the face weight of 7.5 kg/m$^2$, the property of the resin was not sufficiently exhibited due to insufficient drying property, and therefore the coating film was insufficient in vibration damping property.

[Table 2]

| Vibration damping property (loss factor value %) | | Examples | | | | | | | | | | | | | | Comparative Examples | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 | 2 | 3 |
| | 20°C | 4.2 | 4.1 | 4.5 | 4.3 | 4.4 | 4.5 | 4.2 | 8.2 | 8.9 | 7.5 | 7.5 | 7.3 | 10.2 | 7.5 | 3.8 | 7.2 | 9.2 |
| | 40°C | 13.8 | 15.0 | 15.2 | 15.7 | 16.6 | 16.5 | 16.1 | 10.8 | 11.2 | 12.1 | 11.9 | 11.8 | 14.8 | 12.3 | 12.5 | 7.5 | 9.5 |
| | 60°C | 5.1 | 6.5 | 5.9 | 7.1 | 4.9 | 5.4 | 6.1 | 8.8 | 8.3 | 8.0 | 8.5 | 9.1 | 10.8 | 7.9 | 2.0 | 7.7 | 9.7 |

[Table 3]

| | | Face weight (kg/m²) | | | | |
|---|---|---|---|---|---|---|
| | | 1.0 | 2.0 | 4.0 | 6.0 | 7.5 |
| Vibration damping property loss factor value %) | 20°C | 0.9 | 3.2 | 10.2 | 21 | 14.5 |
| | 40°C | 1.8 | 5.8 | 14.8 | 25.1 | 12.8 |
| | 60°C | 05 | 2.9 | 108 | 201 | 8.7 |

**Claims**

1.  An emulsion for vibration damping materials, comprising an acrylic copolymer prepared by copolymerizing a monomer component comprising a polar group-containing monomer,
    wherein the polar group-containing monomer has a SP value (solubility coefficient) of 10.0 or more and 14.0 or less.

2.  The emulsion for vibration damping materials according to Claim 1,
    wherein the polar group-containing monomer is at least one monomer selected from the group consisting of ethyl acrylate, methacrylic acid, methacrylonitrile, (meth) acrylate containing a hydroxyl group, and vinyl acetate.

3.  An emulsion for vibration damping materials, comprising an acrylic copolymer prepared by copolymerizing a monomer component comprising a polar group-containing monomer,
    wherein the polar group-containing monomer is acrylonitrile, and
    the polar group-containing monomer is less than 10% by weight relative to 100% by weight of the total monomer component.

4.  The emulsion for vibration damping materials according to any of Claims 1 to 3,
    wherein the acrylic copolymer has a glass transition temperature of -50 to 60°C.

5.  The emulsion for vibration damping materials according to any of Claims 1 to 4,
    wherein the emulsion for vibration damping materials has a homogeneous structure or a mixed structure formed from two or more emulsions having different glass transition temperatures.

6.  The emulsion for vibration damping materials according to Claim 5,
    wherein a glass transition temperature of at least one of the two or more emulsions having different glass transition temperatures is 0°C or more and higher than a glass transition temperature of at least one of other emulsions, and a difference between the glass transition temperatures is 15°C or more.

7.  A vibration damping composition comprising the emulsion for vibration damping materials of any of Claims 1 to 6.

8.  A use method of the vibration damping composition of Claim 7,
    wherein the vibration damping composition is used as an aqueous vibration damping material.

9.  A coating method of the vibration damping composition of Claims 8,
    wherein the vibration damping composition is coated so as to have a face weight of 2.0 to 6.0 kg/m² after drying, and dried.

10. A vibration damping material obtainable by the coating method of the vibration damping composition of Claim 9.

## INTERNATIONAL SEARCH REPORT

| International application No. |
|---|
| PCT/JP2006/316429 |

A. CLASSIFICATION OF SUBJECT MATTER
*C09K3/00*(2006.01)i, *C08L33/00*(2006.01)i, *F16F15/02*(2006.01)i

According to International Patent Classification (IPC) or to both national classification and IPC

B. FIELDS SEARCHED

Minimum documentation searched (classification system followed by classification symbols)
C09K3/00, C08L33/00, F16F15/02, C09D133/00-133/26

Documentation searched other than minimum documentation to the extent that such documents are included in the fields searched
Jitsuyo Shinan Koho          1922-1996     Jitsuyo Shinan Toroku Koho    1996-2006
Kokai Jitsuyo Shinan Koho    1971-2006     Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 7-62291 A (Nippon Carbide Industries Co., Ltd.),<br>07 March, 1995 (07.03.95),<br>Full text; particularly, Claim 1; Par. Nos. [0001], [0132] to [0142]<br>(Family: none) | 1-10 |
| X<br>A | JP 2005-187514 A (Dainippon Ink And Chemicals, Inc.),<br>14 July, 2005 (14.07.05),<br>Full text; particularly, Claim 1; Par. Nos. [0013], [0042] to [0049]<br>(Family: none) | 1-2,4-10<br>3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 November, 2006 (22.11.06) | 05 December, 2006 (05.12.06) |

| Name and mailing address of the ISA/<br>Japanese Patent Office | Authorized officer |
|---|---|
| Facsimile No. | Telephone No. |

Form PCT/ISA/210 (second sheet) (April 2005)

**INTERNATIONAL SEARCH REPORT**

| International application No. |
| --- |
| PCT/JP2006/316429 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 61-171776 A (Nippon Carbide Industries Co.,<br>Ltd.),<br>02 August, 1986 (02.08.86),<br>Full text; particularly, Claim 1; page 2,<br>upper left column, line 10; examples 2 to 4<br>(Family: none) | 1-2,4-10<br>3 |
| X<br>A | JP 10-324822 A (Dainippon Ink And Chemicals,<br>Inc.),<br>08 December, 1998 (08.12.98),<br>Full text; particularly, Claim 1; Par. Nos.<br>[0027] to [0035]<br>(Family: none) | 1-2,4-5,7-10<br>3,6 |
| X<br>A | JP 57-83547 A (Hoechst AG.),<br>25 May, 1982 (25.05.82),<br>Full text; particularly, Claim 1; page 2, upper<br>right column, line 16; example 1<br>& BR 8105921 A          & DE 3034949 A1<br>& EP 0047993 A1          & ES 8302051 A1<br>& MX 160158 A          & US 4350782 A | 1-2,4-7<br>3,8-10 |

Form PCT/ISA/210 (continuation of second sheet) (April 2005)

**EP 1 930 389 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001152028 A